# EUROPEAN PATENT APPLICATION

(11) **EP 1 835 275 A2**
(43) Date of publication of application: **19.09.2007**
(21) Application number: 07104171.9
(22) Date of filing: 14.03.2007
(51) Int. Cl.: G01N 1/40

(54) **Small volume liquid-liquid extraction device and method of use**

(30) Priority: 14.03.2006 US 375522
(71) Applicant: Mettler-Toledo AutoChem, Inc., Columbia, MD 21046 (US)
(72) Inventor: Haidle, Rudy, Evanston, IL 60202 (US)
(74) Representative: Flutter, Paula

(57) **Abstract**

A device and method for performing small volume liquid-liquid extraction. A slug of a liquid specimen is aspirated into a tube, such as a pipette or pipette tip. The slug of the liquid specimen is caused to contact a filament array that resides within the tube. The slug of the liquid specimen is caused to spread across and adhere to individual filaments of the filament array as it is drawn through the tube. A slug of an extracting solvent that is immiscible with the liquid specimen is subsequently aspirated into the tube and contacted with the liquid specimen-covered filaments. The extracting solvent is selected to extract a particular solute(s) from the liquid specimen. The extracting solvent within the tube may be caused to repeatedly traverse the filament array in order to enhance the extraction process. The solute-carrying extracting solvent is subsequently expelled from the tube for separation.

## Description

### Background and Summary of the Invention

The present invention is related to a liquid-liquid extraction process and a liquid-liquid extraction device for use therein. More particularly, the present invention is related to a liquid-liquid extraction process and extraction device that may be used with samples of very small volume - on the order of microliters, for example.

Liquid-liquid extraction is a process that can be used to separate fluids. In liquid-liquid extraction, the fluids are separated based on the principle that different solutes are soluble to varying degrees in different solvents. Thus, a particular material sample may be substantially immiscible with a particular solvent, while a particular component (solute) of the material sample may be miscible with the solvent. Consequently, a particular solvent can often be used to extract only a desired component from a liquid specimen, whereby the extracted component may be removed with the solvent while the remainder of the liquid specimen remains in the extraction device or is transferred elsewhere. The extracted component can thereafter be separated from the solvent by a number of techniques.

Various types of liquid-liquid extraction are known. Large scale liquid-liquid extraction columns can be used to separate significant amounts of a solute from a mixture. Such systems may employ counter current extraction, wherein two immiscible fluids (solvents) are caused to flow in opposite directions through an extraction column. The lighter of the two solvents flows upward while the heavier of the two solvents flows downward. The material of interest may already reside within the column, or may be introduced into the column such that it is in contact with both fluids. As the solvents are brought together and allowed to separate, they may each transfer with them different concentrations of the solute that is desired to be extracted from the material of interest. The concentration of the solute in each solvent can be determined by the distribution coefficient of the solute and the solvent pair.

In another large scale extraction process, a solute may be extracted from a liquid substance by contact with a single solvent. Typically, the liquid substance containing the solute to be extracted is supplied to an extraction column or similar device in the form of a feed stream. A supply of the solvent is also provided to the extraction column. The solvent is selected to extract the desired solute from the feed stream upon contact. Generally, the solvent and the extracted solute will be removed from the extraction column at one location, while the depleted liquid substance (raffinate) will be removed at another location. Large scale extraction may be used, for example, in petroleum refining, metallurgy, and fat and oil processing.

Liquid-liquid extraction is also performed on a smaller scale, primarily through the use of microtiter plates. In this method, an assembly of plates is typically used. A top plate having a plurality of wells therein is generally provided. The wells are designed to receive small volume liquid samples. The liquid samples placed in the wells are each drawn through a membrane or filter that removes impurities from the samples. The purified samples are deposited into individual wells or other collection devices located in a bottom plate. The drawing of the liquid through the membrane is typically accomplished by employing a vacuum or by placing the plates in a centrifuge. Different types of membranes can be used depending on the composition of the material samples and the impurities sought to be removed therefrom.

None of these known methods and apparatuses are able to quickly, efficiently, and cost effectively perform extraction on very small volumes of liquid, however. For example, microtiter plates are not typically designed to hold liquid samples much smaller than about 0.5 ml in volume. In fact, the wells in typical microtiter plates are commonly sized to hold many times this volume of liquid. Additionally, common microtiter plates contain a plurality of wells. For example, 96-well microtiter plates are well known in the liquid extraction and purification art. Thus, if it is desired to submit only a single small volume liquid sample, or only a limited number of small volume liquid samples to an extraction process, the use of such microtiter plates can be quite wasteful. Further, the use of microtiter plates generally also requires the use of a vacuum-creating device or a centrifuge to encourage the liquid samples to pass through the filter material provided in the sample wells. Consequently, ancillary equipment must typically be available in order to adequately perform such an extraction process. Another problem associated with non-microtiter plate small volume liquid sample analysis is that surface tensions often cause liquid clumping.

In light of the aforementioned deficiencies plaguing current liquid-liquid extraction systems and methods, it can be understood that there exists a need for a liquid-liquid extraction device and method that can be easily and effectively employed to process small volume liquid samples. The present invention satisfies this need.

According to a first aspect, the present invention provides a device for performing small volume liquid-liquid extraction, comprising: a tube for first receiving an amount of a liquid specimen and thereafter an amount of an extracting solvent; a suction producing device in communication with said tube for drawing said liquid specimen and said extracting solvent into said tube; and a filament array suspended within said tube, said filament array located to be in the path of said liquid specimen and said extracting solvent as each travels through said tube; wherein said device is arranged so that, in use, said liquid specimen spreads along and adheres to exposed surfaces of individual filaments of said filament array, thereby wetting said filament array, and, after wetting of said filament array with said liquid specimen, a solute of interest is extractable therefrom through contact with said extracting solvent.

According to a second aspect, the present invention provides a method of performing small volume liquid-liquid extraction, comprising: providing a tube having a filament array disposed therein; aspirating a liquid specimen into said tube and drawing said liquid specimen through at least a portion of said tube so that said liquid specimen passes over and adheres to exposed surfaces of individual filaments of said filament array; subsequently, aspirating an extracting solvent into said tube and drawing said extracting solvent through at least a portion of said tube so that said extracting solvent passes over at least a portion of the liquid specimen-covered filament array, said extracting solvent extracting at least a portion of a solute of interest from said liquid specimen; and expelling at least a portion of said extracting solvent from said tube, said extracting solvent carrying with it an extracted amount of said solute of interest.

Embodiments of the present invention provide a device and method that allows small volume liquid specimens to be quickly, efficiently, and cost effectively subjected to a liquid-liquid extraction process. As such, the device and method of embodiments of the present invention allow for laboratory sample preparation using only a very small amount of a liquid specimen. Consequently, the device and method of embodiments of the present invention may be able to reduce laboratory costs. The device and method of embodiments of the present invention may also be particularly useful in the field of blood analysis, as patient trauma can be minimized by reducing the amount of blood that need be drawn. The device and method of embodiments of the present invention may be suitable for manual use, and, in addition or alternatively, may be used with equally acceptable results by an automated system designed to perform liquid-liquid extraction on a plurality of liquid specimens.

The device of embodiments of the present invention may include a specialized tube, such as a pipette or pipette tip, that can be wetted with a liquid specimen of interest. An amount of the liquid specimen may then be drawn into the tube under vacuum, such as may typically be produced by a compressible bulb or a syringe assembly that is associated with the tube. A suspended array of spaced-apart filaments may reside within the tube. In one exemplary embodiment, the individual filaments of the filament array are oriented with their lengths extending in a direction that is substantially parallel to the longitudinal axis of the tube. In this manner, the liquid specimen that has been drawn into the tube will pass over a substantial portion of the filament length as it is drawn further therein by the vacuum. Upon contact of the liquid specimen with the filaments, a combination of the vacuum and surface tension effects will cause an amount of the liquid to cling to, and spread along, the outside surface thereof. The amount of the liquid specimen drawn into the pipette may be selected or otherwise controlled so that there is enough of the liquid specimen to substantially coat the filaments, but not enough of the liquid specimen to fill the gaps therebetween. Thus, once the liquid specimen has been fully drawn into the tube, there will preferably be air spaces remaining between the filaments.

Once the liquid specimen has been fully contacted with the filament array, an extracting fluid (solvent) may be drawn into the tube. The selected solvent(s) is typically substantially immiscible with the liquid specimen residing on the filaments in the tube, but is also able to separate a solute of interest from the remaining sample material. Separation (extraction) is preferably enhanced by repeatedly varying the vacuum within the tube so that the solvent is caused to pass back-and-forth across the specimen-covered surface area of the filament array. Due to the fact that the liquid specimen is typically disposed in a relatively thin layer over a relatively large filament surface area, separation (diffusion) of the solute of interest tends to occur rather quickly. During the separation process, surface tension effects between the filament array and the liquid specimen are typically sufficient to prevent the often denser solvent from removing the entirety of the liquid sample from the filament array. The solute-containing solvent may then be expelled into a separate receiving vessel. The extraction process may be repeated multiple times if necessary to most fully extract the solute of interest from the liquid specimen.

Another benefit of using the device and method of embodiments of the present invention results from the fact that a majority of the liquid specimen (minus at least a portion of the solute of interest) typically remains on the filament array upon solvent expulsion - only the solute of interest portion of the liquid specimen is expelled into the receiving vessel with the solvent. Consequently, it is not necessary to later detect an interface between dissimilar liquids in the receiving vessel, as is commonly required during a liquid-liquid extraction process, because only the solute-containing solvent is present therein (not the solute-containing solvent and the remaining liquid specimen material, which is immiscible in the solvent).

Therefore, as can be understood, the device and method of embodiments of the present invention can allow for the effective extraction of a solute(s) of interest from a small volume liquid specimen.

Further aspects and embodiments of the present invention will become apparent from the following description and claims.

A better understanding of the system and method of the present invention can be gained by a reading of the following detailed description of certain exemplary embodiments thereof, in conjunction with reference to the particular drawing figures applicable thereto.

### Brief Description of the Drawings

In addition to the features mentioned above, other aspects of the present invention will be readily apparent from the following descriptions of the drawings and exemplary embodiments, wherein like reference numerals across the several views refer to identical or equivalent features, and wherein:
Figure 1a is an enlarged elevational cutaway view, in partial cross-section, illustrating one embodiment of a liquid-liquid extraction device of the present invention that consists of a tube having an internal filament array;
Figure 1b is a top plan view of the liquid-liquid extraction device Figure 1a;
Figure 2 depicts an initial step of one embodiment of a liquid-liquid extraction method of the present invention, wherein the liquid-liquid extraction device of Figure 1 will be used to extract a particular solute from a liquid material;
Figure 3 is a further enlarged view depicting an amount (slug) of the liquid material of Figure 2 being aspirated by the liquid-liquid extraction device of Figure 1;
Figure 4 depicts the slug of liquid material shown in Figure 3 contacting the filament array as it continues to be drawn upward into the liquid-liquid extraction device of Figure 1;
Figure 5 depicts the slug of liquid material shown in Figure 3 spreading out across the length of the filament array as it continues to be drawn upward into the liquid-liquid extraction device of Figure 1;
Figure 6 illustrates the slug of liquid material depicted in Figure 3 to be fully drawn into the liquid-liquid extraction device of Figure 1 and distributed across the surface(s) of the filament array;
Figure 7 depicts an initial step of a solvent aspiration portion of the liquid-liquid extraction method thus far illustrated in Figures 2-6;
Figure 8 depicts an amount (slug) of the solvent of Figure 7 being aspirated by the liquid-liquid extraction device of Figure 1;
Figure 9 depicts the slug of solvent shown in Figure 8 contacting the liquid material-covered filament array as it continues to be drawn upward into the liquid-liquid extraction device of Figure 1;
Figure 10 illustrates the slug of liquid material depicted in Figure 8 to be distributed across the surface(s) of the liquid material-covered filament array;
Figures 11 and 12 depict various positions of the solvent as it is caused to pass back-and-forth across the liquid material-covered filament array in order to extract a solute therefrom;
Figure 13 depicts the solute-carrying solvent being urged toward the open end of the liquid-liquid extraction device of Figure 1;
Figure 14 depicts the solute-carrying solvent being expelled into a receiving vessel; and
Figures 15a and 15b illustrate alternate embodiments of a liquid-liquid extraction device of the present invention.

### Detailed Description of the Exemplary Embodiment(s)

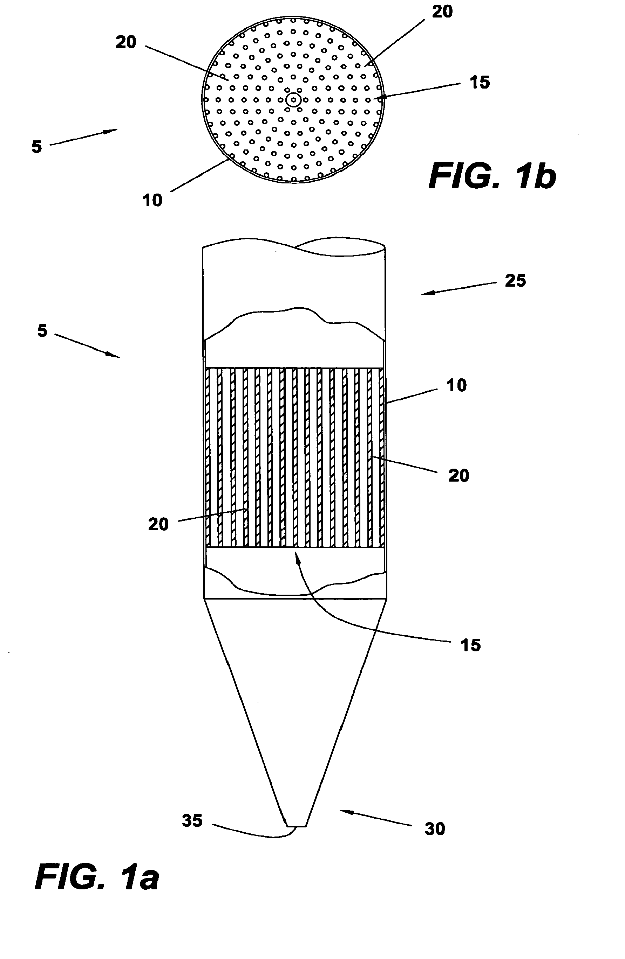

One exemplary embodiment of a liquid-liquid extraction device of the present invention can be observed in Figures 1a and 1b. In this embodiment, a tube 5 is shown to have a substantially hollow body **10.** The tube **5** may be a pipette or pipette tip of various shape. For example, although such is not shown for the purpose of clarity, it is likely that the tube **5** will have a tapered distal end. Preferably, the tube 5 is designed to accommodate small volume liquid samples. For example, it is contemplated that the tube **5** can be used with liquid sample volumes of approximately **50** microliters (µl) - although the tube can be used with other sample volumes as well.

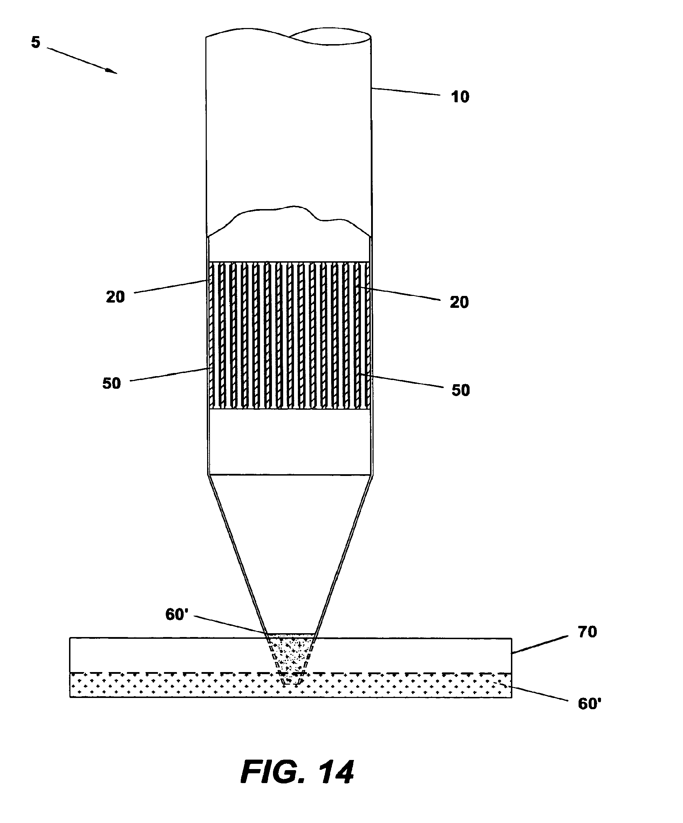

Unlike common pipettes or pipette tips, a filament array **15** is suspended within the body **10** of the tube **5** of the present invention. The filament array **15** may be located at various points along the length of the tube **5** to which it is installed. For example, when the tube **5** has a tapered shape, the filament array may be located within a cylindrical or conical portion thereof. In the particular embodiment of a device of the present invention illustrated in Figures 1-14, the filament array **15** is oriented such the length of each of its filaments **20** runs substantially parallel to the longitudinal axis of the tube **5.** Other filament orientations (not shown) are also possible, however. For example, the filaments **20** may be oriented such that the length thereof runs substantially perpendicular, or at some other angle, to the longitudinal axis of the tube **5.** It should be noted that the spacing between individual filaments **20** of the filament array **15** shown in the drawing figures has been exaggerated for clarity.

It is contemplated that the filaments **20** of the filament array **15** may be constructed from various materials such as, without limitation, metals, plastics, cloths, and composites. For example, the filaments **20** may be comprised of metal wires or fabric threads. It is also contemplated that the filaments **20** of the filament array may be of various length, as well as varying cross-sectional shape and area - although, using filaments of circular cross-section may have certain a inherent advantage (as discussed below).

The filament array **15** may be secured within the tube 5 by various methods. In the simplistic embodiment best observed in Figures 1a and 1b, the array **15** is formed from a group of filaments **20** having a circular cross-section and arranged in a bundle such that adjacent filaments are in contact along their lengths (although the spacing between filaments in Figures 1a-1b is exaggerated for clarity). The circular cross-section of the filaments **20** in this embodiment ensures that there will be spaces between adjacent filaments for allowing passage of a liquid specimen and extracting solvent(s). The overall diameter of the bundle (array) may be selected such that when inserted into the tube **5,** the array **15** will be retained by spring forces exerted against the inner surface of the tube body **10.** Alternatively, the periphery of the array **15** may be caused to adhere to the inner surface of the tube **5,** such as by means of an adhesive or a coating that can be melted after insertion of the array. Notches, dimples, or similar other features may also be provided within the tube **5** in order to retain the array **15.** It may also be possible to embed the filaments **20** in a matrix and subsequently bond the matrix, or portions thereof, to the inner surface of the tube **5.** Thus, there are a multitude of ways by which the filament array **15** can be secured within the tube **5,** and the above examples are not meant to limit the scope of the present invention to the particular techniques described therein. The function of the filament array **15** is described in more detail below.

A proximal end **25** of the tube **5** is preferably adapted for connection to a vacuum-producing device, such as a compressible (e.g., rubber) bulb or a piston-containing syringe assembly. A distal end **30** of the tube **5** is provided with an aperture **35** for allowing liquids to be aspirated into the tube. In operation, vacuum produced by the bulb, syringe, or other such device, allows an amount of a liquid specimen to be drawn through the aperture **35** and into the tube **5.**

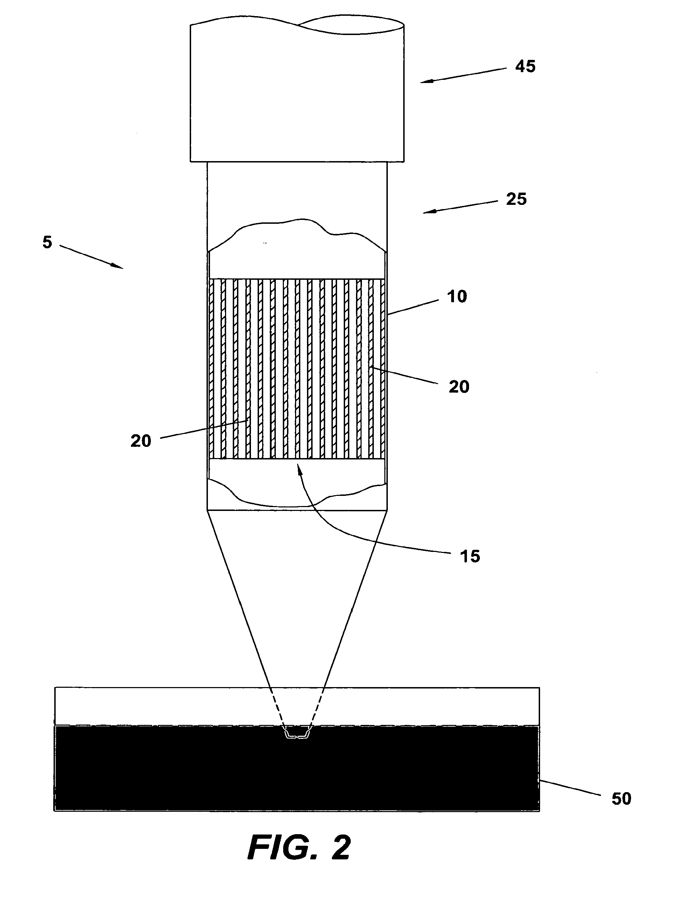

One exemplary method of using a tube **5** of the present invention to perform liquid-liquid extraction is depicted in Figures 2-14. As can be seen in Figure 2, the tube **5** is connected to a vacuum-producing device **45,** such as a compressible bulb or syringe, that allows a vacuum to be created therein. A liquid specimen **50** is provided, from which it is desired to extract a particular solute, or solutes. In one exemplary process employing the present invention, the liquid specimen **50** is blood serum - although the present invention is also equally well suited to use with any of a multitude of other liquid materials. When the liquid specimen **50** is blood serum, the tube **5** may also include a filter (not shown) located between the aperture **35** and the filament array **15** to prevent clots from clogging the array. When used, the filter is preferably an inert filter. The liquid specimen **50** may be contained in any of various vessels. The distal end **30** of the tube **5** is generally wetted by placing it in contact with the liquid specimen **50** and allowing an amount of the liquid specimen to be drawn into the tube under vacuum.

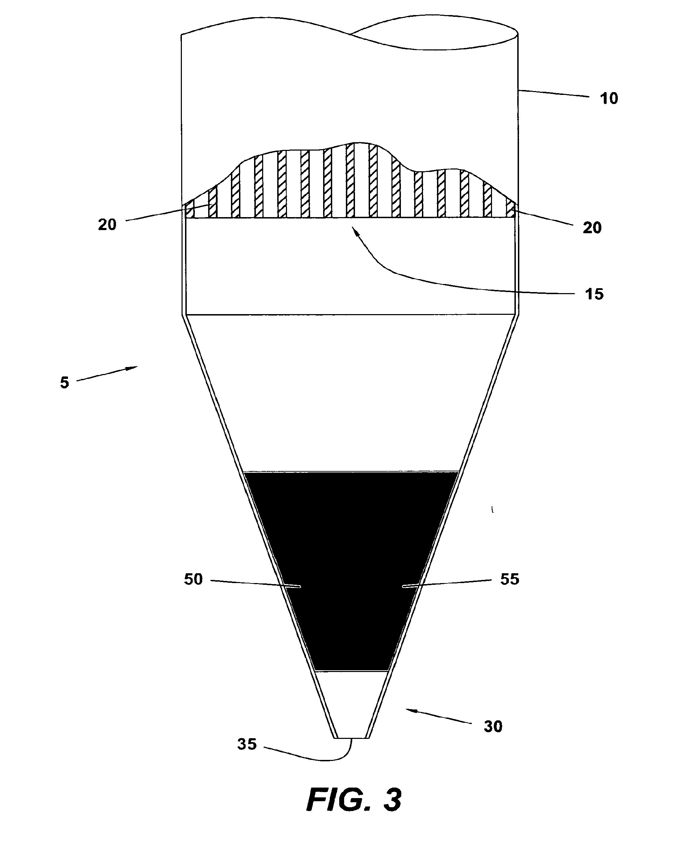

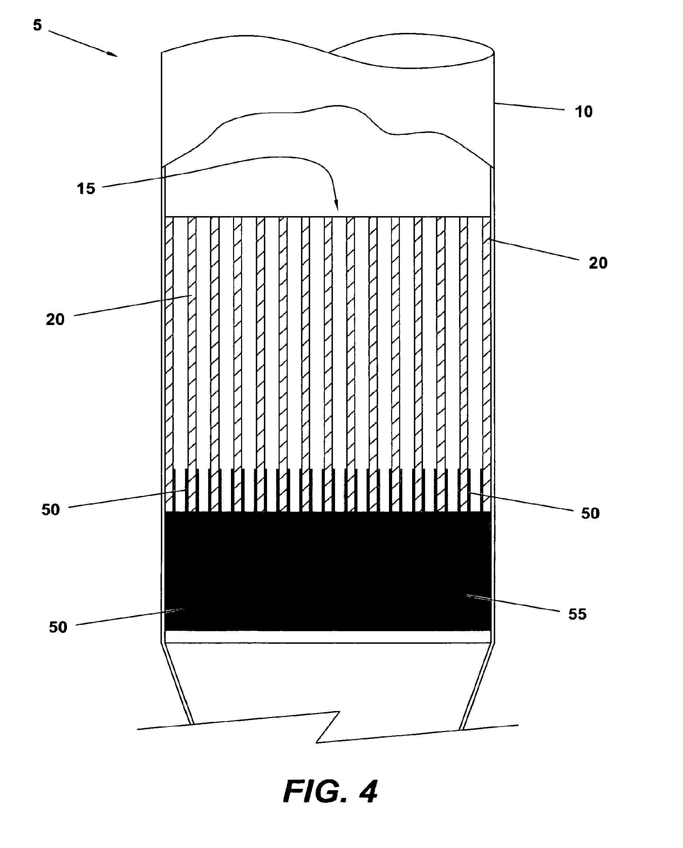

As is shown in Figures 3-6, vacuum created by the vacuum-producing device **45** allows a slug **55** of the liquid specimen **50** to be drawn into the tube **5** and urged toward the proximal end **25** thereof. As the slug **55** of the liquid specimen **50** travels upward through the tube **5,** it eventually contacts the filament array **15,** as can be best observed by reference to Figure **4.** The vacuum draws the slug **55** of the liquid specimen **50** across the filament array **15.** Preferably, the material used to form the filaments **20** of the filament array **15** exhibits an attraction for the liquid specimen **50** material. More specifically, the filament material should be selected to ensure that the liquid specimen **50** forming the slug **55** is encouraged to spread across and cling to the surface of each, or a substantial number of, the filaments **20** of the filament array **15.** This phenomenon is caused by the drawing effect of the vacuum in conjunction with surface tension between the surface of filaments **20** and the liquid specimen **50.** The surface tension effect between the filament array **15** and the liquid specimen **50** should be sufficient to ensure that the often denser solvent does not remove the entirety of the liquid specimen from the filament array during the extraction process. If necessary or desired, the filaments **20** can be surface treated to enhance the surface tension between the filaments and the liquid specimen(s).

The cross-sectional shape and area of the filaments **20** may vary. However, the efficiency of the extraction process can be improved by providing a comparatively large filament surface area, thereby allowing the liquid specimen **50** to cling to and spread over the filaments **20** in a thin layer. Additionally, orienting the filaments **20** with their lengths substantially parallel to the longitudinal axis of the tube **5** can help to provide a greater path length for dynamic contact by an extracting solvent.

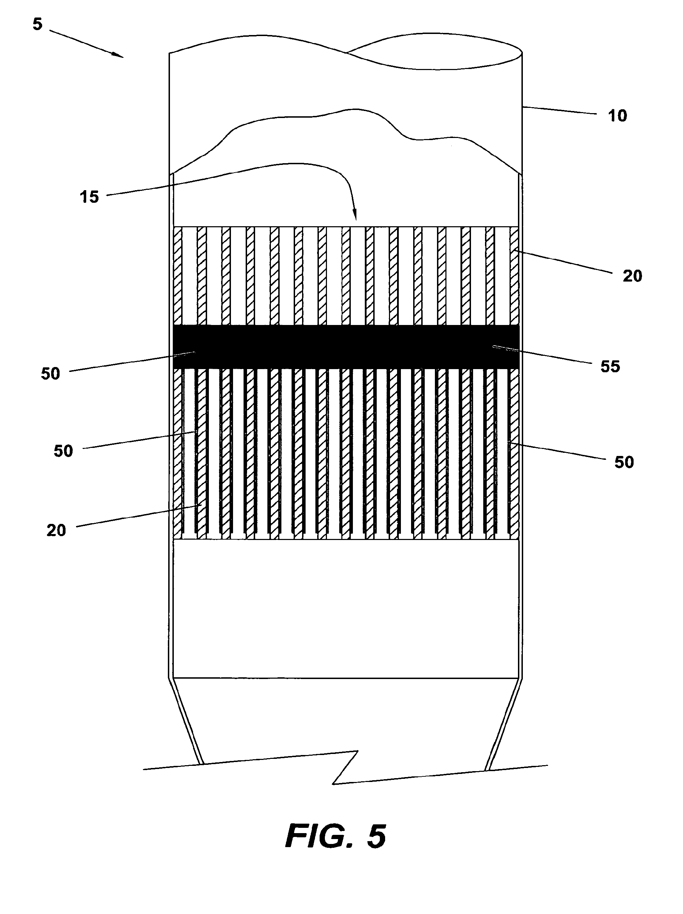

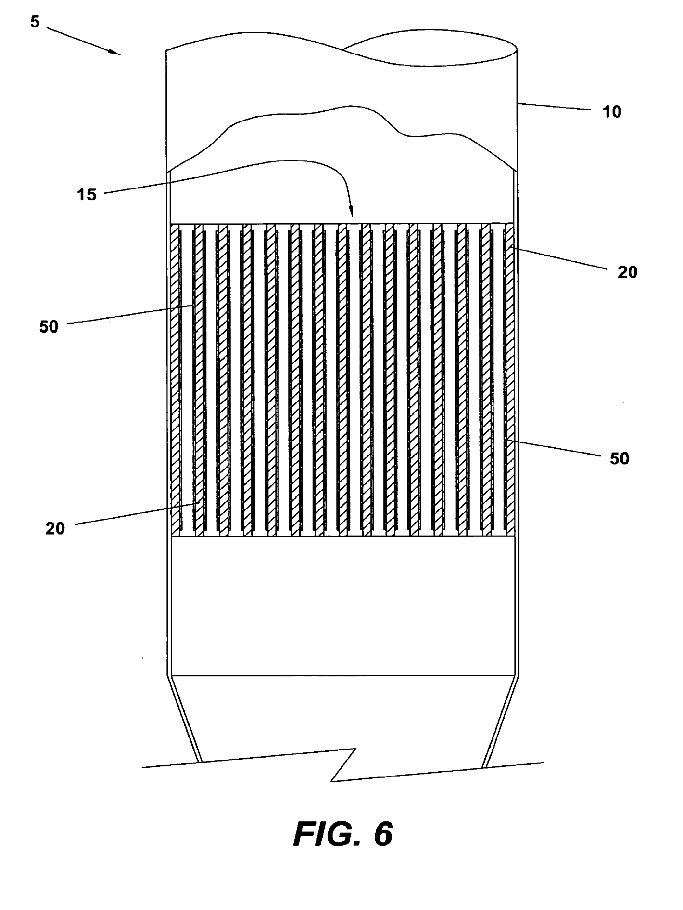

As can be seen in Figures 5-6, the slug **55** of the liquid specimen **50** gradually dissipates as it spreads across the outer surface of the filaments **20.** In Figure 6, the liquid specimen slug **55** is shown to be substantially fully drawn into the tube **5,** whereby at least a majority of the exposed surface area of the filaments **20** is preferably covered (wetted) thereby. It is preferred that the size (volume) of the slug **55** of the liquid specimen **50** initially drawn into the tube **5** be regulated so that there is a sufficient amount of the liquid specimen available to substantially cover the exposed surfaces of the filaments **20,** but not enough to fill the gaps that exist between adjacent filaments. Thus, in a fully wetted filament array **15,** there are preferably air spaces separating the individual filaments **20** (see Figure 6).

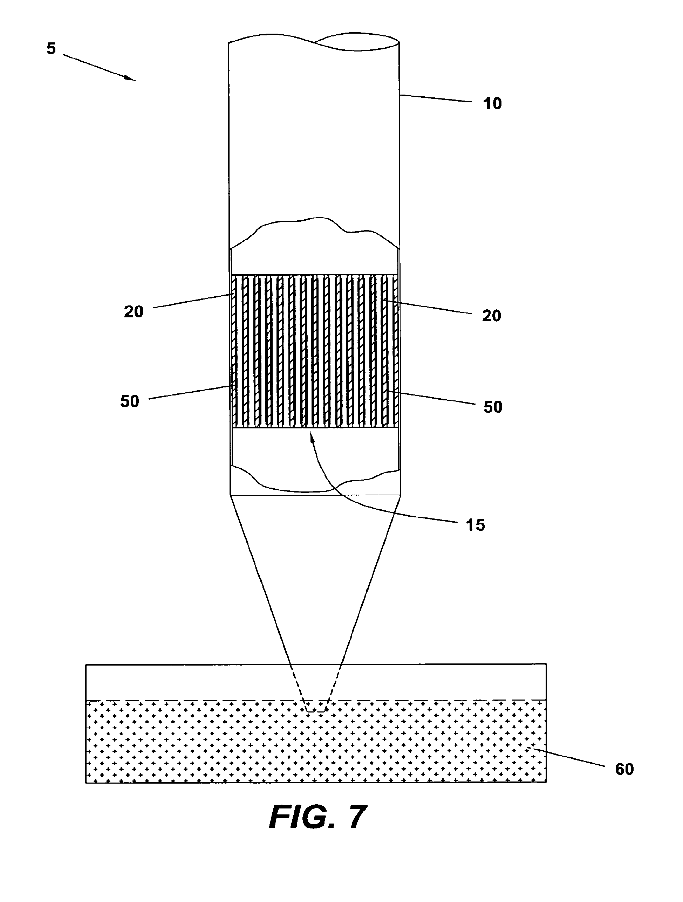

Once the filament array **15** has been wetted with the liquid specimen **50,** an extracting solvent can be aspirated into the tube **5.** In one exemplary embodiment of the present invention, wherein the liquid specimen **50** is blood serum, the extracting solvent **60** is ethyl acetate. It should be understood, however, that the extracting solvent **60** can be any of a multitude of other materials, depending on the composition of the liquid specimen and the solute(s) of interest to be extracted therefrom. The steps of aspirating the extracting solvent into the tube **5** and using the solvent to extract a solute of interest can be observed in Figures 7-14.

As can be seen in Figure 7, a sample of extracting solvent **60** is provided for use in the extraction process. The distal end **30** of the tube **5** is placed in contact with the extracting solvent **60,** allowing an amount of the solvent to be drawn into the tube under vacuum. The extracting solvent **60** is selected based on the particular solute(s) that is desired to be extracted from the liquid material **50.** The selected extracting solvent **60** should be immiscible with the liquid material **50,** while being simultaneously capable of extracting the solute(s) of interest therefrom. The extracting solvent **60** may be contained in any of various vessels.

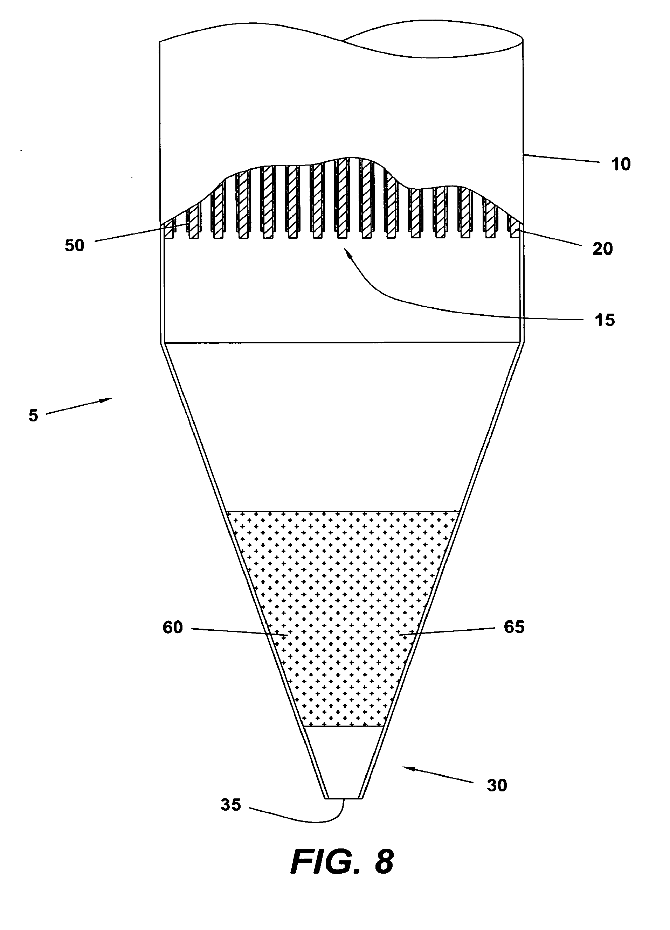

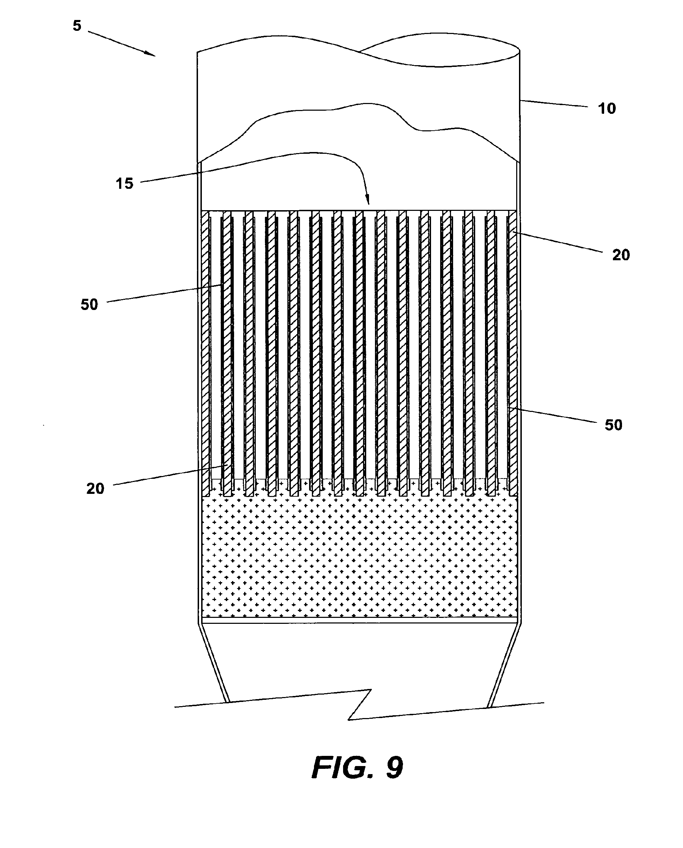

As shown with particularity in Figures 8-9, the vacuum created by the vacuum-producing device **45** allows a slug **65** of the extracting solvent **60** to be drawn into the tube **5** and urged toward the proximal end **25** thereof. As the slug **65** of extracting solvent **60** travels upward through the tube **5,** it eventually contacts the liquid material-covered filament array **15,** as can be best observed by reference to Figure 9. The vacuum draws the slug **65** of extracting solvent **60** across the filament array **15** in a manner similar to that of the liquid specimen **50.**

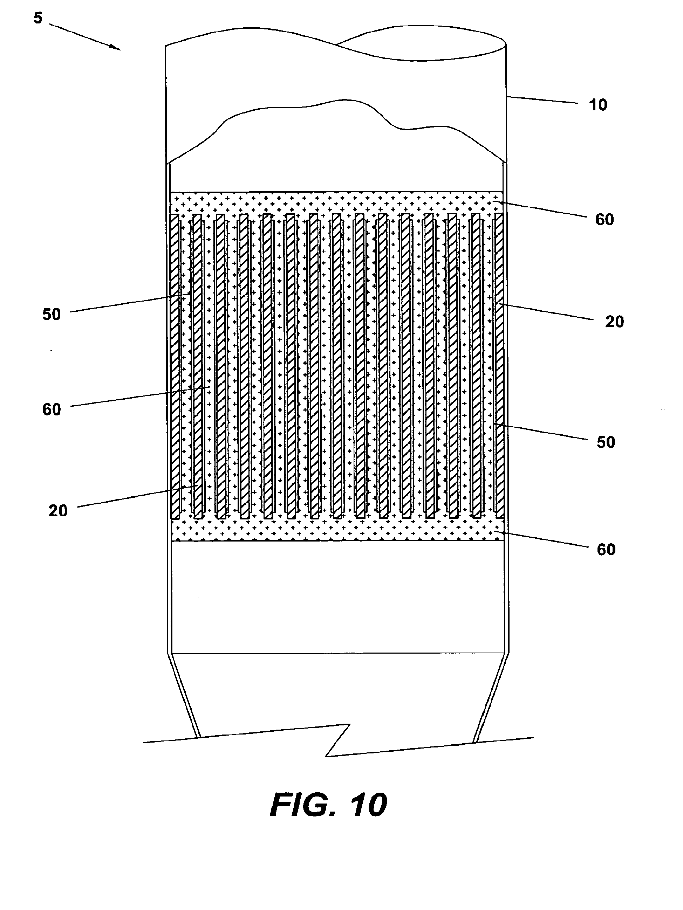

As can be seen by particular reference to Figures 9-10, the slug **65** of extracting solvent **50** dissipates as the solvent spreads across the surfaces of the liquid specimen-covered filaments **20.** It is preferred that the size (volume) of the slug **65** of extracting solvent **60** initially drawn into the tube **5** be regulated so that there is sufficient solvent to substantially encase the liquid specimen-covered filaments **20** and to fill in the gaps existing between adjacent filaments - although smaller or larger volumes of extracting solvent can also be utilized. Consequently, the exposed surface of each filament **20** of the filament array **15,** or at least a substantial number thereof, will preferably eventually become substantially encased by the extracting solvent **60** (see Figure 10). A smaller slug **65** of extracting solvent **60** can be used, but may reduce the efficiency of the extraction process. Similarly, a larger slug **65** of extracting solvent **60** can be used, but may inhibit the dynamics of the extraction process (as will be discussed in detail below). Because the extracting solvent **60** is immiscible with the liquid specimen **50** covering the filaments **20,** substantially all of the liquid specimen, less the solute(s) of interest, will typically remain on the filaments after contact with the extracting solvent. More specifically, the extracting solvent **60** targets the solute(s) of interest for removal from the liquid specimen **50** covering the filaments **20.**

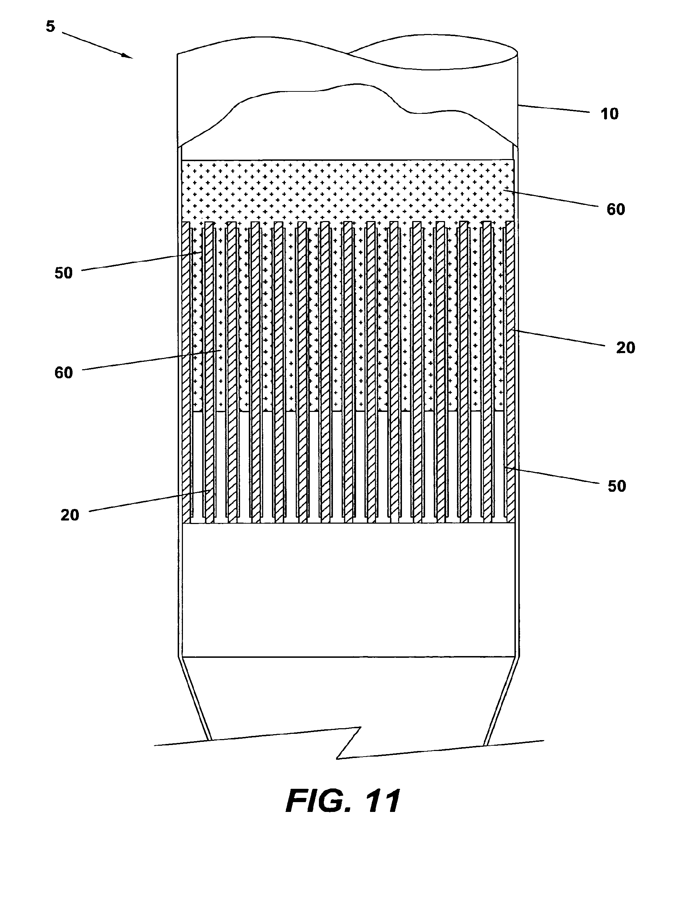

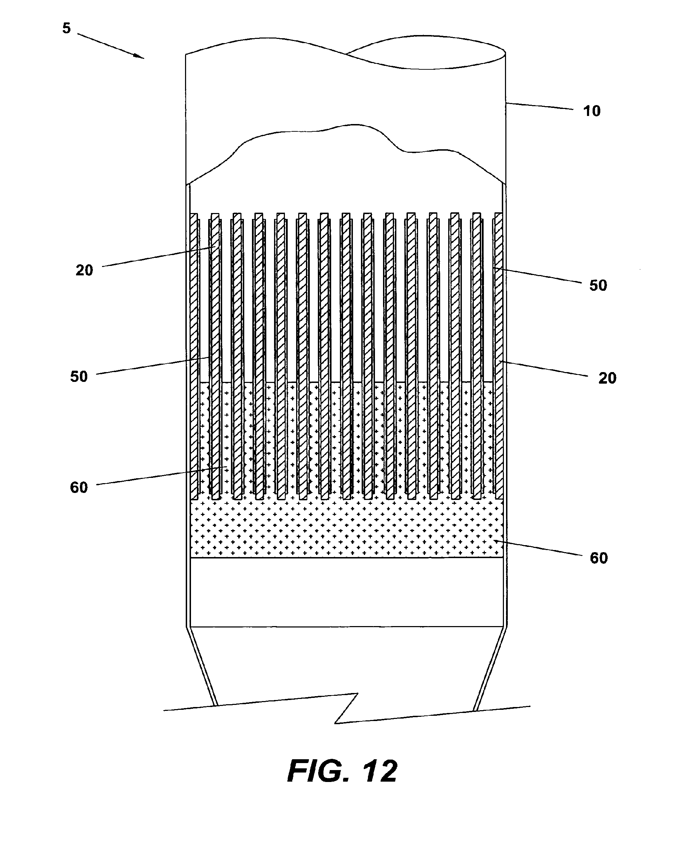

To enhance the ability of the extracting solvent **60** in the tube **5** to extract the solute(s) of interest from the liquid specimen **50** on the filament array **15,** it is preferred that the extracting solvent be caused to repeatedly traverse the liquid specimen-covered filaments **20.** This may be accomplished by causing fluctuations in the vacuum level within the tube **5.** More particularly, by increasing the amount of vacuum within the tube **5,** the extracting solvent **60** located therein will be drawn further toward the proximal end **25** of the tube (see Figure 11). Conversely, by reducing the vacuum level within the tube **5,** the extracting solvent **60** located therein will move toward the distal end **30** of the tube (see Figure 12). Such vacuum changes may be caused by manual manipulation of the vacuum -producing device **45,** or may be automatically accomplished, such as via use of an electronic pipette instrument. Movement of the extracting solvent **60** within the tube **5** may or may not expose a portion of the liquid specimen-covered filament array **15 -** depending on the amount of extracting solvent that has been aspirated and the extent of movement thereof. This movement of the extracting solvent **60** residing in the tube **5** across the liquid specimen-covered filament array **15** may be repeated numerous times.

The interaction of the extracting solvent **60** with the liquid specimen **50,** in combination with the back-and-forth flow of the extracting solvent over the liquid specimen covered filament array **15,** acts to cause the dissolution of the solute of interest from the liquid specimen into the extracting solvent. While it is likely possible to extract the solute of interest from the liquid specimen **50** clinging to the filament array **15** merely through prolonged contact with the extracting solvent **60,** it has been found that causing the extracting solvent to traverse the filament array in the manner previously described can greatly hasten the extraction process.

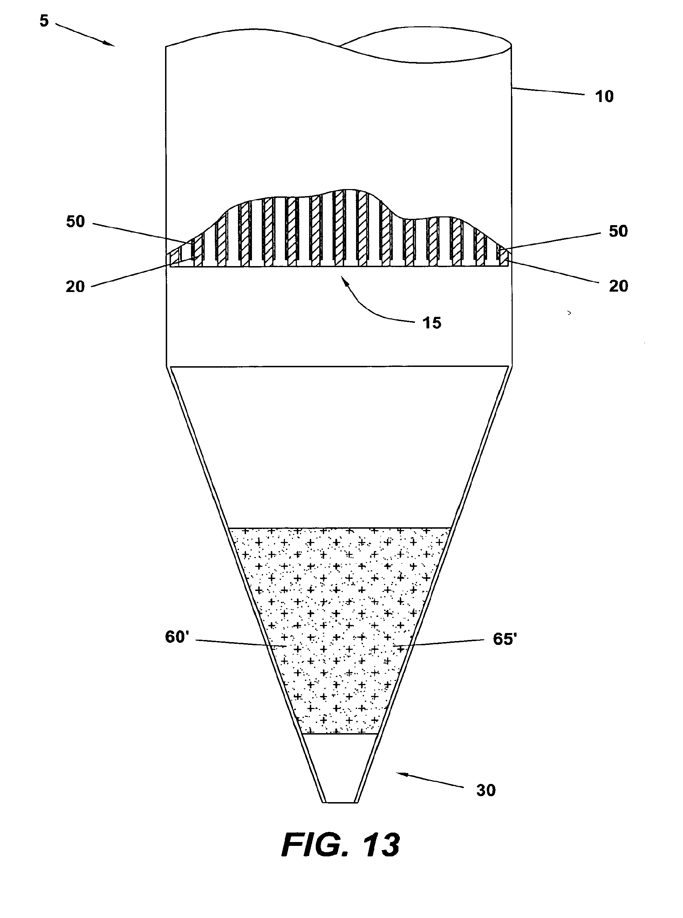

As can be best observed in Figures 13-14, once the extracting solvent **60** has been caused to traverse the liquid material-covered filaments **20** a sufficient number of times, the solute-carrying solvent **60'** is forced toward the distal end **30** of the tube **5.** This may be accomplished by releasing the vacuum within the tube 5 or by pressurizing the interior of the tube. A slug **65'** of solute-carrying solvent **60'** eventually arrives at the aperture **35** in the distal end **30** of the tube **5,** where it is expelled therefrom. The solute-carrying solvent **60'** may be collected in any of a multitude of different vessels **70.** The solute may thereafter be separated from the solvent by various known methods, such as, for example only, evaporation or filtration. If more than one solute has been removed from the liquid specimen **50** within the tube **5,** the individual solutes may also be separated.

It is contemplated that the steps of aspirating an amount of extracting solvent **60** into the tube **5** may be repeated a number of times in order to fully extract the solute(s) of interest from the liquid specimen **50** clinging to the filament array **15.** For example, it may not be possible to diffuse all, or an acceptable amount, of the solute(s) of interest present in the liquid specimen **50** residing within the tube **5** into an initial amount of the extracting solvent **60.** In such case, a fresh amount of extracting solvent **60** may be aspirated into the tube **5,** and the subsequent extraction steps depicted in Figures 8-14 may be repeated. This can be done any number of times.

It is also contemplated that a second extracting solvent (not shown) can be aspirated into the tube **5** subsequent to extraction using the first extracting solvent **60,** and manipulated in the aforementioned manner in order to extract a different solute(s) of interest. Again, the second extracting solvent should be immiscible with the remaining liquid specimen **50** residing within the tube **5,** and should also be selected to properly interact with the new solute(s) of interest. Therefore, it is within the scope of the present invention that more than one extracting solvent can be used to extract more than one solute from a single liquid specimen. It is contemplated that a multitude of different extracting solvents could be used on a single liquid specimen.

In yet another embodiment of the present invention, an intermediate liquid material (not shown) may be aspirated into and expelled from the tube **5** between the steps of aspirating the liquid specimen **50** and aspirating an extracting solvent. Such an intermediate liquid material may be used, for example, to wash impurities from the liquid specimen **50** prior to its contact with an extracting solvent. Preferably, such an intermediate liquid material is also substantially immiscible with the liquid specimen **50** residing within the tube **5.** Therefore, it is within the scope of the present invention that liquid materials other than a liquid specimen and extracting solvent(s) can be aspirated into the tube **5** during the extraction process. It is contemplated that a multitude of different intermediate liquid materials could be used on a single liquid specimen. It is further contemplated that one or more intermediate liquid materials could be used between an extraction step, or extraction steps, performed on a single liquid specimen.

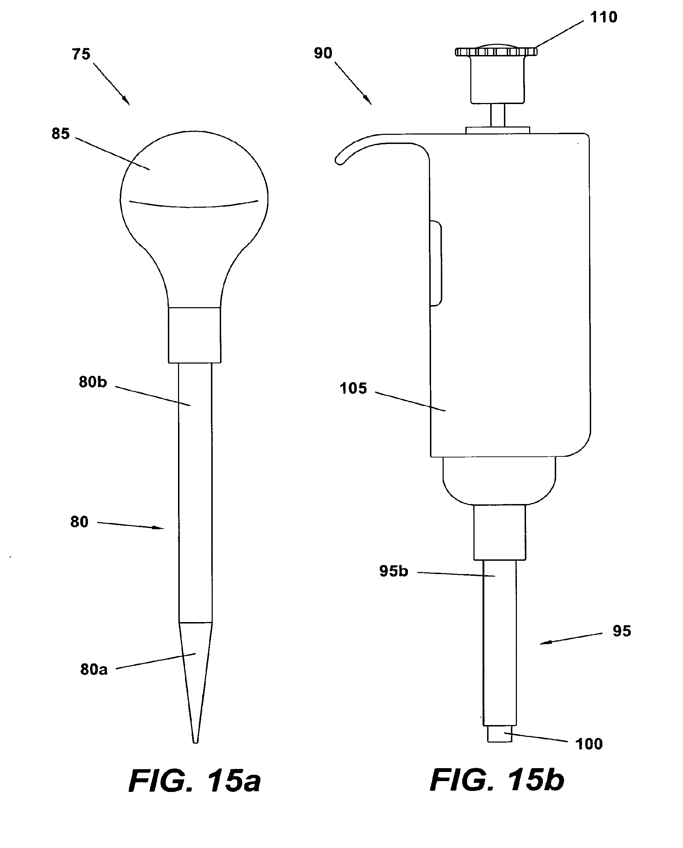

Examples of two different pipette instruments **75, 90** that may include a tube **5** according to the present invention are shown in Figures 15a and 15b, respectively. Figure 15a represents a simplistic pipette instrument **75,** consisting essentially of a tapered pipette **80** and a compressible bulb **85.** In the instrument **75** of Figure 15a, the filament array **15** (not visible) may be located in the tapered portion **80a** or the cylindrical portion **80b** of the pipette **80.** Figure 15b represents a more complex type of pipette instrument **90** that is commonly used in laboratory analysis, consisting essentially of a pipette **95** attached to a handle portion **105,** from which extends the plunger **110** of a syringe assembly. The pipette portion **95** of this instrument **90,** as shown, is designed to be removably attached at a distal end **100** to a pipette tip. However, it should also be understood that the pipette **95** could also have an integral tip. In the instrument of Figure 15b, the filament array **15** (not visible) may be located in the cylindrical portion **95b** of the pipette **90,** may be located in an integral, tapered portion (not shown), of the pipette, or may be located in an attachable pipette tip. Either of the devices **75, 90** may be disposable, or may be designed to allow for sterilization.

The device and method of the present invention can be used manually. For example, it is contemplated that the tube **5** illustrated in Figure 1 can form a portion of any of a number of handheld and manually or electronically controlled pipette devices or instruments. It is also possible to make use of the device and method of the present invention in an automated liquid-liquid extraction process, such as may be performed, for example, by the ALLEX is liquid-liquid extraction system manufactured by Mettler-Toledo, Inc. The use of the device and method of the present invention with such an automated liquid-liquid extraction system would eliminate the need to detect the boundary between liquid layers (i.e., between layers of a solute containing solvent and the remainder of a liquid specimen subjected to the solvent) - which could save time, reduce costs, and increase accuracy. When used with an automated liquid-liquid extraction system, the device of the present invention may be a removable or unitary part of the system. For example, the filament array may be enclosed within a sterilizable pipette or pipette tip, or may be a disposable version thereof. A device of the present invention for use with an automated system may also be a portion of a more complex instrument, such as one of the instruments shown in Figures 15a or 15b. Such an instrument may be robotically moved and operated.

While certain embodiments of the present invention are described in detail above, the scope of the invention is not to be considered limited by such disclosure, and modifications are possible without departing from the spirit of the invention as evidenced by the following claims:

## Claims

1. A device for performing small volume liquid-liquid extraction, comprising:
a tube for first receiving an amount of a liquid specimen and thereafter an amount of an extracting solvent;
a suction producing device in communication with said tube for drawing said liquid specimen and said extracting solvent into said tube; and
a filament array suspended within said tube, said filament array located to be in the path of said liquid specimen and said extracting solvent as each travels through said tube;
wherein said liquid specimen spreads along and adheres to exposed surfaces of individual filaments of said filament array, thereby wetting said filament array; and
wherein, after wetting of said filament array with said liquid specimen, a solute of interest is extracted therefrom through contact with said extracting solvent.

2. The device of claim 1, wherein the tube has a distal end and a proximal end, whereby the suction device draws said liquid specimen and said extracting solvent into said distal end of said tube and urges each toward said proximal end of said tube, whereby said liquid specimen and said extracting solvent each travels from said distal end toward said proximal end of said tube.

3. The device of either preceding claim, wherein said tube is a pipette.

4. The device of claim 1 or claim 2, wherein said tube is a removable pipette tip.

5. The device of any one of the preceding claims, wherein said suction producing device is a compressible bulb.

6. The device of any one of claims 1 to 4, wherein said suction producing device is a syringe assembly.

7. The device of claim 6, wherein said syringe assembly is manually operatable.

8. The device of claim 6, wherein said syringe assembly is electronically operatable.

9. The device of any one of the preceding claims, wherein said filament array is oriented such that individual filaments thereof extend lengthwise in a direction that is substantially parallel to the longitudinal axis of said tube.

10. The device of any one of the preceding claims, wherein individual filaments of said filament array are arranged in a planar relationship.

11. The device of any one of claims 1 to 9, wherein individual filaments of said filament array are arranged in a concentric circle relationship.

12. The device of any one of the preceding claims, wherein said suction producing device can be manipulated to move an amount of extracting solvent within said tube back-and-forth across said filament array.

13. The device of any one of the preceding claims, wherein said tube is disposable.

14. The device of any one of the preceding claims, wherein said tube can be sterilized.

15. The device of any one of the preceding claims, wherein said individual filaments of said filament array are surface treated to enhance surface tension between said filaments and said liquid specimen.

16. The device of any one of the preceding claims, further comprising a filter located between an entry point of said liquid specimen into said tube and said filament array.

17. The device of any one of claims 3 to 15 as dependent upon claim 2, further comprising a filter located between said distal end of said tube and said filament array.

18. A method of performing small volume liquid-liquid extraction, comprising:
providing a tube having a filament array disposed therein;
aspirating a liquid specimen into said tube and drawing said liquid specimen through at least a portion of said tube so that said liquid specimen passes over and adheres to exposed surfaces of individual filaments of said filament array;
subsequently, aspirating an extracting solvent into said tube and drawing said extracting solvent through at least a portion of said tube so that said extracting solvent passes over at least a portion of the liquid specimen-covered filament array, said extracting solvent extracting at least a portion of a solute of interest from said liquid specimen; and
expelling at least a portion of said extracting solvent from said tube, said extracting solvent carrying with it an extracted amount of said solute of interest.

19. A method of performing small volume liquid-liquid extraction, comprising:
(a) providing a tube having a filament array disposed therein, said tube having a distal end and a proximal end;
(b) aspirating a liquid specimen into said distal end of said tube and drawing said liquid specimen toward said proximal end of said tube so that said liquid specimen passes over and adheres to exposed surfaces of individual filaments of said filament array;
(c) subsequently, aspirating an extracting solvent into said distal end of said tube;
(d) drawing said extracting solvent toward said proximal end of said tube so that at least a portion of said extracting solvent passes over a liquid specimen-covered section of said filament array;
(e) causing said extracting solvent to move back toward said distal end of said pipette, so that at least a portion of said extracting solvent passes over a liquid specimen-covered section of said filament array;
(f) optionally, repeating steps (d)-(e) as many times as desired to enhance extraction;
(g) expelling said extracting solvent from said pipette, said extracting solvent carrying with it an extracted amount of a solute of interest; and
(h) separating said solute of interest from said extracting solvent.

20. The method of claim 18 or claim 19, wherein the volume of said liquid specimen is selected such that spaces between said individual filaments will not be filled thereby.

21. The method of any one of claims 18 to 20, wherein said tube is a pipette.

22. The method of any one of claims 18 to 20, wherein said tube is a removable pipette tip.

23. The method of any one of claims 18 to 22, wherein said liquid specimen and/or said extracting solvent are aspirated into said tube using a compressible bulb.

24. The method of any one of claims 18 to 22, wherein said liquid specimen and/or said extracting solvent are aspirated into said tube using a syringe assembly.

25. The method of claim 24, wherein said syringe assembly is manually operatable.

26. The method of claim 24, wherein said syringe assembly is electronically operatable.

27. The method of any one of claims 18 to 26, wherein said liquid specimen and said extracting solvent are caused to pass over a filament array in which individual filaments thereof extend lengthwise in a direction that is substantially parallel to the longitudinal axis of said tube.

28. The method of any one of claims 18 to 27, further comprising causing said extracting solvent present within said tube to repeatedly traverse at least a portion of said filament array having said liquid specimen adhered thereto.

29. The method of any one of claims 18 to 28, wherein one or more additional amounts of said extracting solvent are separately drawn into and expelled from said tube.

30. The method of claim 29 as dependent upon claim 19, further comprising repeating steps (d)-(e) as many times as desired, for example, once, twice, three times or more than three times.

31. The method of any one of claims 18 to 30, further comprising causing said extracting solvent present within said tube to repeatedly traverse at least a portion of said filament array having said liquid specimen adhered thereto.

32. The method of any one of claims 18 to 31, wherein said extracting solvent removes more than one solute from said liquid specimen.

33. The method of any one of claims 18 to 32, further comprising separating dissimilar solutes removed from said liquid specimen by said extracting solvent.

34. The method of any one of claims 18 to 33, wherein dissimilar extracting solvents are sequentially used to extract different solutes from said liquid specimen.

35. The method of any one of claims 18 to 34, further comprising collecting solute-containing extracting solvent expelled from said tube.

36. The method of claim 35, further comprising separating said solute from said extracting solvent.

37. The method of any one of claims 18 to 36, wherein said liquid-liquid extraction is performed manually.

38. The method of any one of claims 18 to 36, wherein said liquid-liquid extraction is performed using a robotic system.

39. The method of any one of claims 18 to 38, wherein said tube is disposable.

40. The method of any one of claims 18 to 39, wherein said tube can be sterilized.

41. The method of any one of claims 18 to 40, further comprising surface treating said individual filaments of said filament array to enhance surface tension between said filaments and said liquid specimen.

42. The method of any one of claims 18 to 41, further comprising locating a filter between an entry point of said liquid specimen into said tube and said filament array.

43. The method of any one of claims 20 to 42 as dependent upon claim 19, further comprising locating a filter between said distal end of said tube and said filament array.
